**Europäisches Patentamt**

**European Patent Office**

**Office européen des brevets**

(19)

(11) Veröffentlichungsnummer : **0 440 665 B1**

(12)

# EUROPÄISCHE PATENTSCHRIFT

(45) Veröffentlichungstag der Patentschrift :
**19.11.92 Patentblatt 92/47**

(51) Int. Cl.$^5$ : **B62D 5/083**

(21) Anmeldenummer : **89909753.9**

(22) Anmeldetag : **12.09.89**

(86) Internationale Anmeldenummer :
**PCT/EP89/01056**

(87) Internationale Veröffentlichungsnummer :
**WO 90/03295 05.04.90 Gazette 90/08**

(54) **DREHSCHIEBERVENTIL, INSBESONDERE FÜR HILFSKRAFTLENKUNGEN VON KRAFTFAHRZEUGEN.**

(30) Priorität : **17.09.88 DE 3831728**

(43) Veröffentlichungstag der Anmeldung :
**14.08.91 Patentblatt 91/33**

(45) Bekanntmachung des Hinweises auf die
Patenterteilung :
**19.11.92 Patentblatt 92/47**

(84) Benannte Vertragsstaaten :
**DE FR GB IT**

(56) Entgegenhaltungen :
**WO-A-88/01958**

(56) Entgegenhaltungen :
**DE-A- 3 303 063**
**DE-A- 3 413 072**
**FR-A- 2 448 670**
**GB-A- 1 308 992**

(73) Patentinhaber : **ZF FRIEDRICHSHAFEN Aktiengesellschaft**
**Löwentaler Strasse 100 Postfach 2520**
**W-7990 Friedrichshafen 1 (DE)**

(72) Erfinder : **BREITWEG, Werner**
**Lauchhofstra e 7**
**W-7070 Schwäbisch Gmünd (DE)**
Erfinder : **SCHÄNZEL, Rainer**
**Schwegelhof 2/1**
**W-7087 Essingen (DE)**

EP 0 440 665 B1

Jouve, 18, rue Saint-Denis, 75001 PARIS

**Beschreibung**

Die Erfindung betrifft ein Drehschieberventil, insbesondere für Hilfskraftlenkungen von Kraftfahrzeugen, mit einem gegenüber einer Steuerbuchse verdrehbaren Drehschieber. Mit einem solchen Drehschieberventil wird ein Druckmittel von einer Druckmittelquelle zu und von einem Servomotor gesteuert. Dazu weisen die Steuerbuchse und der Drehschieber miteinander zusammenwirkende Längsnuten auf. Die miteinander zusammenwirkenden Steuerkanten der Steuerlängsnuten der Steuerbuche und des Drehschiebers sind jeweils parallel zueinander ausgebildet. Ein derartiges Drehschieberventil ist bekannt aus der DE-PS 33 03 063.

Bei einem derartigen Drehschieberventil treten bei den üblichen Herstellungsverfahren bestimmte Toleranzen der Steuernutbreite der Steuerbuchse und des Drehschiebers sowie der Teilung der Steuerkanten auf. Bei den fertig montierten Drehschieberventilen liegen deshalb die Ventilkennlinien innerhalb eines Toleranzfeldes, dessen Breite den Wunsch nach einheitlichen, gleichen Lenkungen nicht erfüllt.

Der Erfindung liegt die Aufgabe zugrunde, ein bekanntes Drehschieberventil dahingehend zu verbessern, daß die Toleranzfeldbreite der Ventilkennlinien auf ein Minimum reduziert wird. Dabei sollen einfache Herstellungs- und Montageverfahren angewendet werden.

Diese Aufgabe wird durch das im Anspruch 1 gekennzeichnete Drehschieberventil und das im Anspruch 3 gekennzeichnete Verfahren zur Montage des Drehschieberventils gelöst. Zweckmäßige und vorteilhafte Ausgestaltungen sind in den Unteransprüchen angegeben.

Die Lösung der Aufgabe besteht vor allem darin, daß die Steuerkanten der Steuerlängsnuten der Steuerbuchse und des Drehschiebers in ihrer Längsrichtung konisch zueinander ausgebildet sind. Derart ausgebildete Steuerbuchsen und Drehschieber werden bei der Montage zunächst relativ zueinander in axialer Richtung bis in eine Stellung verschoben, in der die Ventilkennlinie eine bestimmte Lage im Toleranzfeld der Ventilkennlinien einnimmt. Danach werden die Steuerbuchse und der Steuerschieber in ihrer axialen Lage fixiert.

Werden die Steuerbuchse und der Drehschieber durch einen Torsionsstab zueinander zentriert, so werden die beiden Teile nach der Einstellung ihrer genauen axialen Lage über den Torsionsstab fest miteinander verbunden. Dies geschieht dadurch, daß die Steuerbuchse und der Drehschieber mit dem Torsionsstab verbohrt und verstiftet werden.

Die Steuernuten der Steuerbuchse werden zweckmäßigerweise durch ein spanloses Fertigungsverfahren, wie beispielsweise Kaltfließpressen oder Rundkneten, hergestellt. Eine Fertigbearbeitung durch Schleifen ist jedoch ebenso möglich.

Durch die erfindungsgemäße Ausbildung der beiden Teile des Drehschieberventils und durch das Montageverfahren lassen sich Drehschieberventile herstellen, deren Ventilkennlinien innerhalb eines sehr eng begrenzten Toleranzfeldes liegen.

Im folgenden wird die Erfindung anhand eines in der Zeichnung dargestellten Ausführungsbeispieles näher erläutert. Es zeigen

Fig. 1 den Längsschnitt durch das erfindungsgemäße Drehschieberventil, entsprechend der Linie I-I in Fig. 2,

Fig. 2 einen Querschnit durch das Drehschieberventil der Fig. 1,

Fig. 3 einen Teil-Längsschnitt entsprechend der Linie III-III in Fig. 2,

Fig. 4 eine Ventilkennlinie mit dem Toleranzfeld.

Das Drehschieberventil besteht im wesentlichen aus einer Steuerbuchse 1, in der ein Drehschieber 2 verdrehbar geführt ist. Die Steuerbuchse 1 weist in ihrem Inneren Steuerlängsnuten 3 und 4 auf, die mit Steuerkanten 5 und 6 versehen sind. Die Steuerlängsnuten 3 und 4 stehen mit den beiden Druckräumen eines nicht dargestellten Servomotors in Verbindung.

Der Drehschieber 2 weist Steuerlängsnuten 7 und 8 auf, die mit einer nicht dargestellten Servopumpe bzw. mit einem nicht dargestellten Behälter in Verbindung stehen. Die Steuerlängsnuten 7 sind mit Steuerkanten 10 und 11 versehen, die mit den Steuerkanten 5 und 6 zusammenwirken. Die Steuerkanten 10 und 11 sind in bekannter Weise mit Steuerfasen versehen, mit denen eine bestimmte Form der Ventilkennlinie des Drehschieberventils erreicht werden kann.

Die Steuerkanten 5 und 6 der Steuerlängsnuten 3 und 4 der Steuerbuchse 1 verlaufen konisch zueinander. Ebenso verlaufen die Steuerkanten 10 und 11 der Steuerlängsnut 7 des Drehschiebers 2 konisch zueinander. Die Steuerkante 5 der Steuerbuchse 1 und die Steuerkante 10 des Drehschiebers 2 sind parallel zueinander ausgebildet. Ebenso ist die Steuerkante 6 der Steuerbuchse 1 parallel zu der Steuerkante 11 des Drehschiebers 2 ausgebildet.

Die Steuerlängsnuten 3 und 4 der Steuerbuchse 1 werden zweckmäßigerweise in einem spanlosen Verfahren der Kaltumformtechnik hergestellt. Dies ist beispielsweise möglich durch Kaltfließpressen oder Rundkneten. Ebenso können die Steuerlängsnuten 7 und 8 des Drehschiebers 2 spanlos hergestellt werden.

Der Drehschieber 2 wird in der Steuerbuchse 1 durch einen Torsionsstab 12 zentriert. Der Torsionsstab 12 ist an jeweils einem Ende mit der Steuerbuchse 1 bzw. mit dem Drehschieber 2 drehfest verbunden. Die Verbindung erfolgt beispielsweise durch Stifte 13 und 14.

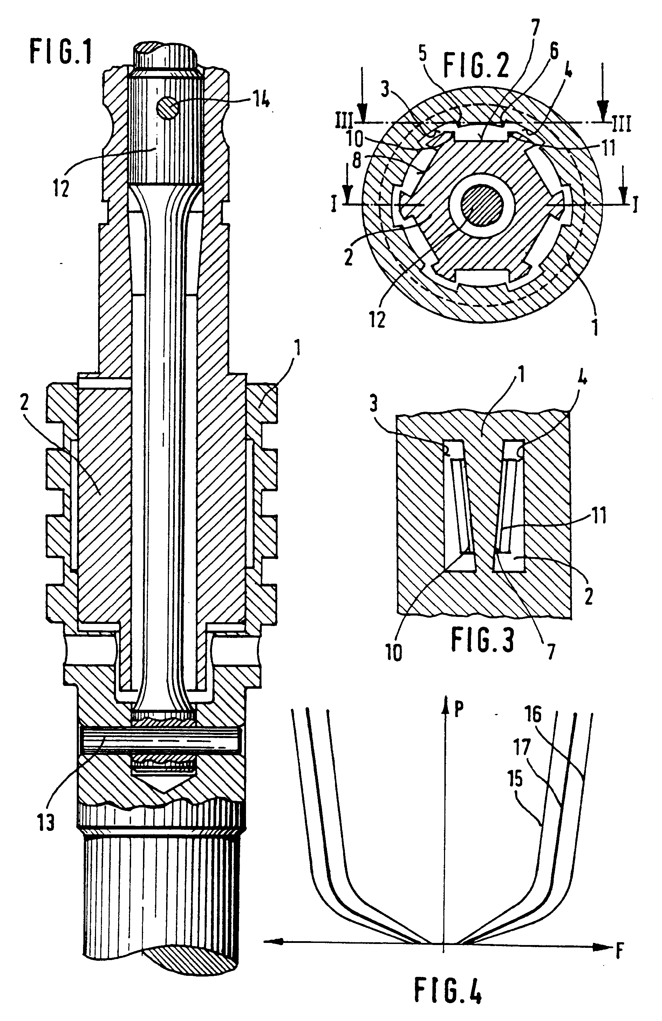

In Fig. 4 ist in einem Diagramm der Arbeitsdruck p einer Hilfskraftlenkung über der Kraft F am Lenkhandrad aufgetragen. Bei bisher bekannten Hilfskraftlenkungen liegt das Toleranzfeld der Ventilkennlinien zwischen den Linien 15 und 16. Ideal ist eine Ventilkennlinie 17. Um diese Ventilkennlinie 17 zu erreichen, wird das Drehschieberventil nach folgendem Verfahren montiert:

Der Drehschieber 2 wird in der Steuerbuchse 1 zunächst in axialer Richtung bis in eine Stellung verschoben, in der die Ventilkennlinie ihre ideale Lage im Toleranzfeld einnimmt. Danach wird der Drehschieber in der Steuerbuchse in seiner axialen Lage fixiert. Die Fixierung der axialen Lage erfolgt dadurch, daß die Steuerbuchse 1 und der Drehschieber 2 mit dem Torsionsstab 12 fest verbunden werden. Dies erfolgt beispielsweise dadurch, daß die Steuerbuchse 1 und/oder der Drehschieber 2 mit dem Torsionsstab verbohrt und durch die Stifte 13 und 14 mit den Enden des Torsionsstabes 12 verbunden werden. Es ist jedoch ebenso möglich, entweder die Steuerbuchse 1 oder den Drehschieber 2 vor der Montage fest mit dem einen Ende des Torsionsstabes 12 zu verbinden. Dies kann beispielsweise durch Einwalzen in eine Kerbverzahnung oder durch eine andere unlösbare Verbindung erfolgen.

Bezugszeichen

| 1 | Steuerbuchse |
| 2 | Drehschieber |
| 3 | Steuerlängsnut |
| 4 | Steuerlängsnut |
| 5 | Steuerkante |
| 6 | Steuerkante |
| 7 | Steuerlängsnut |
| 8 | Steuerlängsnut |
| 9 | - |
| 10 | Steuerkante |
| 11 | Steuerkante |
| 12 | Torsionsstab |
| 13 | Stift |
| 14 | Stift |
| 15 | Linie |
| 16 | Linie |
| 17 | Ventilkennlinie |

**Patentansprüche**

1. Drehschieberventil, insbesondere für Hilfskraftlenkungen von Kraftfahrzeugen,
   - mit einem gegenüber einer Steuerbuchse (1) verdrehbaren Drehschieber (2), deren beide miteinander zusammenwirkende Flächen zylindrisch ausgebildet sind,
   - wobei die Steuerbuchse (1) und der Drehschieber (2) für die Steuerung eines Druckmittels von einer Druckmittelquelle zu einem Servomotor miteinander zusammenwirkende Steuerlängsnuten (3, 4, 7, 8) aufweisen und
   - wobei miteinander zusammenwirkende Steuerkanten (5, 6, 10, 11) der Steuerlängsnuten (3, 4, 7, 8) der Steuerbuchse (1) und des Drehschiebers (2) parallel zueinander ausgebildet sind,
   dadurch **gekennzeichnet,** daß die Steuerkanten (10, 11) wenigstens der mit der Druckmittelquelle in Verbindung stehenden Steuerlängsnuten (7) des Drehschiebers (2) sowie die mit diesen zusammenwirkenden Steuerkanten (5, 6) der Steuerbuchse (1) in bezug auf die Längsachse des Drehschieberventils im gleichen Winkel schräg aufeinander zulaufend ausgebildet sind.

2. Drehschieberventil nach Anspruch 1, dadurch **gekennzeichnet,** daß die Steuerlängsnuten (3, 4) der Steuerbuchse (1) durch ein spanloses Fertigungsverfahren, wie Kaltfließpressen oder Rundkneten, hergestellt sind.

3. Verfahren zur Montage eines Drehschieberventils nach Anspruch 1, dadurch **gekennzeichnet,**
   - daß die Steuerbuchse (1) und der Drehschieber (2) zunächst relativ zueinander in axialer Richtung bis in eine Stellung verschoben werden, in der die Ventilkennlinie (17) eine bestimmte Lage in dem Toleranzfeld der Ventilkennlinien einnimmt und
   - daß danach die Steuerbuchse (1) und der Drehschieber (2) in ihrer gegenseitigen axialen Lage fixiert werden.

4. Verfahren nach Anspruch 3 zur Montage eines Drehschieberventils nach Anspruch 1, wobei zwischen der Steuerbuchse (1) und dem Drehschieber (2) ein diese beiden Teile zentrierender Torsionsstab (12) angeordnet ist, dadurch **gekennzeichnet,** daß nach der Einstellung der genauen axialen Lage der Steuerbuchse (1) und des Drehschiebers (2) diese beiden Teile zur Fixierung ihrer axialen Lage über den Torsionstab (12) fest verbunden werden.

5. Verfahren nach Anspruch 4, dadurch **gekennzeichnet,** daß die Steuerbuchse (1) und/ oder der Drehschieber (2) zur Fixierung ihrer axialen Lage mit dem Torsionsstab (12) verbohrt und verstiftet werden.

**Claims**

1. A rotary slide valve system, more particularly for power assisted steering gears of motor vehicles, comprising
   - a rotary slide valve (2) which is rotatable relative to a control sleeve (1), the two cooperating surfaces of the valve being cylindrical,
- the control sleeve and the rotary slide valve (2) being formed with longitudinal slots (3, 4, 7, 8) cooperating to form a servo-motor for controlling a pressure medium from a pressure-medium source, and
- cooperating control edges (5, 6, 10, 11) of the longitudinal slots (3, 4, 7, 8) of the control sleeve (1) and the rotary slide valve (2) being disposed parallel to one another,
characterised in that the control edges (10, 11) of at least the longitudinal slots (7) of the rotary slide valve (2) connected to the pressure-medium source, and the cooperating control edges (5, 6) of the control sleeve (1) are disposed so as to converge on one another at the same angle relative to the longitudinal axis of the rotary slide valve system.

2. A rotary slide valve system according to claim 1, characterised in that the longitudinal slots (3, 4) of the control sleeve (1) are made by a non-cutting process such as cold extrusion or round kneading.

3. A method of assembling a rotary slide valve system according to claim 1, characterised in that the control sleeve (1) and the rotary slide valve (2) are first moved relative to one another in the axial direction into a position in which the valve characteristic (17) occupies a specific position in the tolerance field of the valve characteristics, after which
- the control sleeve (1) and the rotary slide valve (2) are fixed in axial position relative to one another.

4. A method according to claim 3 for assembling a rotary slide valve system according to claim 1, a torsion rod (12) being disposed between the control sleeve (1) and the rotary slide valve (2) and centring these two parts, characterised in that after the exact axial position of the control sleeve (1) and the rotary slide valve (2) has been set, these two parts are permanently connected via the torsion rod (12) to fix their axial position.

5. A method according to claim 4, characterised in that the control sleeve (1) and/or the rotary slide valve (2) are drilled and provided with pins for fixing their axial position by means of the torsion rod (12).

**Revendications**

1. Distributeur rotatif, en particulier pour des directions assistées de véhicules automobiles,
- comportant un tiroir (2) rotatif en regard d'un manchon de distribution (1), qui ont tous deux des surfaces coopérant mutuellement de forme cylindrique,
- où le manchon de distribution (1) et le tiroir rotatif (2) comportent des rainures longitudinales de distribution (3, 4, 7, 8) qui coopèrent mutuellement pour distribuer un fluide hydraulique d'une source de fluide sous pression à un servo-moteur,
- et où des arêtes de commande (5, 6, 10, 11), coopérant mutuellement, desdites rainures de distribution (3, 4, 7, 8) du manchon (1) et du tiroir (2) ont des formes mutuellement parallèles,
**caractérisé** en ce qu'au moins les arêtes de commande (10, 11) des rainures de distribution (7) du tiroir (2) qui sont reliées à la source de fluide sous pression, ainsi que les arêtes de commande (5, 6) du manchon (1) qui coopèrent avec celles-ci, convergent l'une vers l'autre sous le même angle d'obliquité par rapport à l'axe longitudinal du distributeur rotatif.

2. Distributeur rotatif selon la revendication 1, **caractérisé** en ce que les rainures de distribution (3, 4) du manchon (1) sont fabriquées par un procédé d'usinage sans copeaux, tel que le matriçage à froid ou le forgeage rotatif.

3. Procédé de montage d'un distributeur rotatif selon la revendication 1, **caractérisé** :
- en ce que le manchon (1) et le tiroir (2) sont d'abord déplacés l'un par rapport à l'autre en direction axiale jusqu'à une position dans laquelle la courbe caractéristique (17) du distributeur occupe une situation déterminée dans le champ de tolérance des courbes caractéristiques du distributeur,
- et en ce que le manchon (1) et le tiroir (2) sont ensuite fixés dans leur position axiale mutuelle.

4. Procédé selon la revendication 3 pour le montage d'un distributeur rotatif selon la revendication 1, où une barre de torsion (12) est interposée entre le manchon (1) et le tiroir (2) et centre ces deux pièces, **caractérisé** en ce qu'après ajustement de la position axiale exacte du manchon (1) et du tiroir (2), on fixe ces deux pièces par l'intermédiaire de la barre de torsion (12) pour fixer leur position axiale.

5. Procédé selon la revendication 4, **caractérisé** en ce que le manchon (1) et/ou le tiroir (2) sont percés et goupillés avec la barre de torsion (12) pour fixer leur position axiale.

FIG.1

FIG.2

FIG.3

FIG.4